# EUROPÄISCHE PATENTSCHRIFT

(11) **EP 0 443 206 B1**
(45) Veröffentlichungstag und Bekanntmachung des Hinweises auf die Patenterteilung: **15.03.1995**
(21) Anmeldenummer: 90125720.4
(22) Anmeldetag: 28.12.1990
(51) Int. Cl.: B01D 63/02, B65H 55/04

(54) **Verfahren zum Herstellen von Hohlfadenstapeln**
Process for preparing hollow filament stacks
Procédé pour préparer des piles de filaments creux

(30) Priorität: 17.02.1990 DE 4005132
(43) Veröffentlichungstag der Anmeldung: 28.08.1991
(73) Patentinhaber: Akzo Nobel N.V., 6824 BM Arnhem (NL)
(72) Erfinder: Schneider, Klaus, Dr., W-8765 Erlenbach (DE); Wollbeck, Rudi, W-8765 Erlenbach (DE); Zang, Thomas, W-8752 Goldbach (DE)
(74) Vertreter: Fett, Günter

(56) Entgegenhaltungen:
- EP-A- 0 021 582
- EP-A- 0 093 677
- EP-A- 0 285 812
- EP-A- 0 350 853
- FR-A- 2 222 134

## Beschreibung

Die Erfindung betrifft ein Verfahren zum Herstellen von Hohlfadenstapeln, bei denen die Hohlfäden in parallel zueinander liegenden Ebenen angeordnet sind, die Hohlfäden jeder Ebene im wesentlichen parallel und zumindest zum Teil in Abständen zueinander angeordnet sind, die Hohlfäden benachbarter Ebenen sich kreuzen und benachbarte Endbereiche der Hohlfäden zumindest punktförmig miteinander verbunden sind.

Aus der DE-OS 38 23 858 ist eine Vorrichtung zum Filtrieren von gasförmigen oder flüssigen Dispersionen durch die poröse Wand von Hohlfäden bekannt, bei der die porösen Hohlfäden in einer Vielzahl von übereinander angeordneten Hohlfadenschichten angeordnet sind und die offenen Enden der Hohlfäden in einer rohrförmig ausgebildeten Einbettmasse eingebettet sind, welche den Strömungskanal für die zu filtrierende Dispersion umschließt und die für die Dispersion undurchlässig ist. Die Hohlfadenanordnung dieser bekannten Vorrichtung kann dadurch erreicht werden, daß aus einem üblichen Hohlfadenflächengebilde, also beispielsweise einer Hohlfadenmatte, einem Hohlfadengewebe, einem Hohlfadengelege o.dgl. einzelne Filterelemente ausgestanzt und übereinander gestapelt werden und dieses so erhaltene Hohlfadenpaket einem Einbettverfahren unterworfen wird, bei welchem die Hohlfadenenden eingebettet werden. Dabei können innerhalb einer Schicht des Hohlfadenpaketes die porösen Hohlfäden mit Vorteil parallel angeordnet sein. Die Hohlfäden benachbarter Schichten können sich darüber hinaus vorzugsweise kreuzen. Das Ausstanzen der Filterelemente kann auch bei gleichzeitigem Abschweißen der Schnittstellen erfolgen.

Bei diesem bekannten Verfahren muß also zunächst ein Hohlfadenflächengebilde hergestellt werden, bei dem die Hohlfäden in einem im wesentlichen festen Verband angeordnet sind, so daß das Flächengebilde sicher gehandhabt, d.h. beispielsweise zusammengerollt, transportiert, aufgerollt, ausgebreitet, übereinandergelegt usw., werden kann, ohne daß die Anordnung der Hohlfäden, also beispielsweise die Parallellage, in dem Flächengebilde dabei verloren geht. Dieses daraus resultierende Herstellungsverfahren für die Filterelemente ist somit aufwendig und birgt zudem die Gefahr, daß Hohlfäden bereits beim Herstellen des Hohlfadenflächengebildes und/oder bei der späteren Handhabung desselben beschädigt werden. Häufig weisen derartige Hohlfadenflächengebilde auch Mittel zum Halten der Hohlfäden, wie Kettfäden oder Schußfäden, auf, die zwangsläufig in dem Hohlfadenpaket und damit auch in der Filtervorrichtung verbleiben, was nicht immer erwünscht und nicht immer von Vorteil ist.

Aus der EP-B1-0 093 677 ist ein Verfahren zum Herstellen eines Hohlfaser**bündels** bekannt, bei dem von wenigstens einer Spule wenigstens eine Hohlfaser mittels einer Fadenführungsvorrichtung auf eine Trommel abwechselnd gegen jedes äußere Ende dieser Trommel aufgewickelt wird, wobei die Hohlfasern aufeinanderfolgende Schichten bilden und sich von einer Schicht zur anderen überschneiden, die Hohlfasern entlang Längsebenen, die zur Achse der Trommel parallel sind, in regelmäßigen Intervallen, die im wesentlichen der Länge der gewünschten Bündel entsprechen, geschnitten werden, wodurch eine Vielzahl von Hohlfasermatten aus sich überschneidenden Hohlfasern gebildet werden, die im wesentlichen eben sind und an ihren beiden äußeren Enden offen sind, und jede der so gebildeten Hohlfasermatten spiralig auf sich selbst in Längsrichtung aufgerollt wird, um so viele Hohlfaserbündel zu bilden.

Die Herstellung von Hohlfaden**stapeln** kann dieser Druckschrift auch nicht andeutungsweise entnommen werden. Zudem wird dort durch das Aufrollen der Hohlfasermatten die zunächst hergestellte gleichmäßige Anordnung der Hohlfasern teilweise wieder zerstört, da die dort angegebenen Mittel, durch welche die geschnittenen Enden der Hohlfasern wenigstens provisorisch auf den Unterlagen festgehalten werden sollen, ein Verschieben und Verlagern der Hohlfasern nicht verhindern können.

Der vorliegenden Erfindung lag daher die Aufgabe zugrunde, ein Verfahren zur Verfügung zu stellen, mit dem sich Hohlfadenstapel der eingangs beschriebenen Art auf einfache Weise und damit außerordentlich wirtschaftlich herstellen lassen und die keine Mittel zum Halten der Hohlfäden aufweisen.

Diese Aufgabe wird durch ein Verfahren zum Herstellen von Hohlfadenstapeln gelöst, wobei wenigstens ein Hohlfaden mit einer hin- und herbewegten (changierenden) Fadenführungseinrichtung spiralförmig auf eine um ihre Längsachse rotierende Trommel mit vieleckigem Querschnitt aufgewickelt wird und übereinanderliegende im wesentlichen ebene Hohlfadenlagen gebildet werden, und zwar derart, daß die Hohlfadenabschnitte (Windungen) einer Lage die Hohlfadenabschnitte der unmittelbar darüber- und darunterliegenden Lagen kreuzen, jedoch innerhalb einer Lage im wesentlichen parallel zueinander und zumindest zum Teil in gegenseitigen Abständen verlaufen, und wobei nach Erreichen der gewünschten Anzahl von Hohlfadenlagen der Aufwickelvorgang beendet wird, die aufgewickelten Hohlfäden an den Kanten der Trommel festgelegt (fixiert) werden und aus den im wesentlichen ebenen Bereichen des so gebildeten Hohlfadenwickels auf der Trommel Segmente (Hohlfadenstapel) beliebiger Form herausgetrennt und dabei benachbarte Endbereiche der Hohlfäden zumindest punktförmig miteinander verbunden werden.

Das erfindungsgemäße Verfahren hat sich insbesondere zum Herstellen von Hohlfadenstapeln aus zum Abtrennen von Gas aus einem Fluid geeigneten Hohlfäden bewährt.

Unter Fluid wird im Rahmen der vorliegenden Erfindung ein natürliches oder künstlich erzeugtes Gasgemisch, beispielsweise Luft oder Erdgas, bzw. eine Flüssigkeit, in welcher Gas (Gasgemisch) in Form von Gasblasen oder auch in gelöster Form bzw. chemisch gebunden vorliegt, verstanden, wobei das Fluid auch eine dampfförmige Komponente enthalten kann.

Ziel der Gastrennung (Gasseparation) beispielsweise ist das weitestgehende, möglichst vollständige, Zerlegen von natürlich vorkommenden Gasgemischen wie Erdgas oder Luft oder von als Produkt oder Abfallprodukt (Abgas) anfallenden, also künstlich erzeugten, Gasgemischen in ihre einzelnen Komponenten und deren (Rück-)Gewinnung. Dabei ist es auch möglich, nur einzelne Komponenten eines Gasgemisches abzutrennen und zu verwerten.

Ziel der Entgasung von Flüssigkeiten beispielsweise ist das möglichst vollständige Abtrennen von in der Flüssigkeit gelöstem oder chemisch gebundenem oder in Form von Gasblasen vorliegendem Gas (Gasgemisch). Das Abtrennen von in einer Flüssigkeit gelöstem Gas (Gasgemisch) kann durch Aufrechterhalten eines transmembranen Konzentrations- bzw. (Partial-)Druckgefälles bewirkt werden.

Die zum Abtrennen von Gas aus einem Fluid geeigneten Hohlfäden haben eine als (semipermeable) Membran wirkende Wand. Es handelt sich hierbei dann also um Membranen in Hohlfadenform, auch Hohlfadenmembranen, Hohlfasermembranen oder Kapillarmembranen genannt.

Das Abtrennen von Gas aus einem Fluid mittels Membranen in Hohlfadenform sowie die hierzu geeigneten Membranwerkstoffe sind an sich bekannt.

Für die Abtrennung von Gaskomponenten aus einem Gasgemisch werden sogenannte nichtporöse Membranen, für das Abtrennen von Gasblasen aus einer Flüssigkeit dagegen in der Regel poröse bis mikroporöse nichtbenetzbare Membranen verwendet. Bei der Entfernung gelöster oder chemisch gebundener Gase aus Flüssigkeiten können sowohl poröse als auch nichtporöse Membranen zur Anwendung kommen, wobei die Membranen benetzbar oder nichtbenetzbar sein können.

Das Abtrennen von Gas aus einem Fluid erfolgt beispielsweise in der Weise, daß die Hohlfäden außen von dem zu behandelnden Fluid beaufschlagt werden und die abgetrennte(n) Gaskomponente(n) bzw. das abgetrennte Gas (Gasgemisch) aus dem Innern (Lumen) der Hohlfäden abgezogen wird (werden).

Um die oben beispielshalber aufgeführten kurz umrissenen Verfahren möglichst wirtschaftlich durchführen zu können, ist es erforderlich, eine möglichst große, die Gasabtrennung bewirkende Membranfläche auf möglichst kleinem Raum anzuordnen. Um dies zu erreichen, müssen die Hohlfasendurchmesser und Hohlfadenabstände möglichst klein bemessen werden. Erreicht wird dies durch eine möglichst dichte, dabei aber geordnete Anordnung der Hohlfäden in dem Durchströmungskanal für das zu behandelnde Fluid. Mit dem erfindungsgemäßen Verfahren können nunmehr Hohlfadenstapel für Hohlfadenmodule bzw. Trenneinrichtungen, die diese Anforderungen erfüllen, auf einfache Weise hergestellt werden.

So lassen sich aus erfindungsgemäß hergestellten Hohlfadenstapeln Hohlfadenmodule herstellen, bei denen die Hohlfäden in Ebenen angeordnet sind, die im wesentlichen senkrecht zur Durchströmungsrichtung, d.h. senkrecht zur Achsrichtung des Moduls, liegen, bei dem die Endbereiche der Hohlfäden in Vergußmasse eingebettet sind, wobei die Vergußmasse als ring- oder rohrförmiger Körper ausgebildet sein kann und einen Durchströmungskanal bildet, durch den die Hohlfäden geführt sind, und bei denen die an ihren beiden Enden offenen Hohlfäden auf der äußeren Mantelfläche (Umfangsfläche) des Vergußmassekörpers ausmünden. Derartige Hohlfadenmodule sind an sich bekannt.

Die aus erfindungsgemäß hergestellten Hohlfadenstapeln hergestellten Hohlfadenmodule bzw. Einrichtungen sind je nach Art der verwendeten Hohlfäden bzw. der gewählten Verfahrensführung bzw. Verfahrensparameter aber auch zur Begasung von Flüssigkeiten, zur Filtration (einschließlich der Ultra- und Mikrofiltration) oder als Wärmeaustauscher geeignet.

Zur Herstellung eines Hohlfadenstapels kann ein einzelner Hohlfaden erfindungsgemäß aufgewickelt werden. Es können jedoch auch mehrere Hohlfäden gleichzeitig aufgewickelt werden, wobei es dabei möglich ist, die Hohlfäden in gebündelter Form oder als Fadenschar aufzuwickeln. Beim Aufwickeln eines Hohlfadenbündels muß die Ablage auf der Trommel so erfolgen, daß zwischen den nebeneinanderliegenden Hohlfadenbündelabschnitten (Windungen) einer Lage ein Abstand eingehalten wird. Das Aufwickeln einer Hohlfadenschar kann mit Hilfe einer kammförmigen hin- und herbewegten Fadenführungseinrichtung bewirkt werden, wobei die Hohlfadenschar aus mehreren einzelnen Hohlfäden oder aus mehreren Hohlfadenbündeln, die jeweils in gegenseitigen Abständen auf die Wickeltrommel aufgewickelt werden, bestehen können.

Das erfindungsgemäße Verfahren wird in besonders vorteilhafter Weise zur Verarbeitung frischgesponnener Hohlfäden zu Hohlfadenstapeln, also unmittelbar an Hohlfadenspinnmaschinen eingesetzt. Hierbei ist es dann ebenfalls möglich, nicht nur einen einzelnen Hohlfaden, sondern auch mehrere Hohlfäden, die beispielsweise aus einer Mehrloch-Düse gesponnen werden, als Bündel oder Fadenschar auf die Trommel aufzuwickeln.

Die Verarbeitung frischgesponnener Hohlfäden direkt an der Spinnmaschine bietet den großen Vorteil, daß das sonst übliche ggf. mehrmalige Umspulen der Hohlfäden, bei welchem die Hohlfäden wechselnden Zugspannungen, mehrmaligem Umlenken und Gleiten über Fadenleitorgane ausgesetzt sind, in vorteilhafter Weise entfällt. Neben einer erheblichen Verringerung der Herstellungskosten für Hohlfadenstapel wird somit also auch eine äußerst schonende Verarbeitung der Hohlfäden erreicht. Hinzu kommt noch, daß bei der Verarbeitung frischgesponnener Hohlfäden keine oder allenfalls nur eine äußerst geringe Menge von Avivage zum Schutz der Hohlfäden beim Führen derselben über Fadenleitorgane notwendig ist, was deshalb ein großer Vorteil ist, weil Avivage beim späteren Einbetten der Hohlfadenenden die Haftfestigkeit zwischen Hohlfaden und Einbettmasse nachteilig beeinflußt.

Diese besonders bevorzugte Ausführungsform des Verfahrens ist möglich, da die Aufwickelgeschwindigkeit auf der Wickeltrommel mühelos an die z.T. hohen Spinngeschwindigkeiten angepaßt werden kann, beispielsweise lediglich durch Verändern der Trommeldrehzahl.

Es sind jedoch auch noch andere Ausgestaltungsformen möglich, so können beispielsweise mehrere Hohlfäden zunächst in gebündelter Form aufgespult und später als ein oder mehrere Bündel oder als Fadenschar - wie oben bereits ausgeführt - auf der Wickeltrommel aufgewickelt werden.

Das erfindungsgemäße Verfahren gestattet es zudem, den Füllgrad, auch Packungsdichte genannt, in einem weiten Bereich einzustellen und dabei einen sehr homogenen geometrisch geordneten Aufbau des Hohlfadenstapels zu erreichen, der eine gute und gleichmäßige Durchströmung des gesamten Hohlfadenpaketes eines Hohlfadenmoduls gewährleistet. Eine Änderung des Füllgrades kann auf einfache Weise beispielsweise durch Veränderung der Changiergeschwindigkeit der Fadenführungseinrichtung bei unverändertr Trommeldrehzahl erreicht werden. Eine Erhöhung dieser Geschwindigkeit, also eine höhere (Doppel-)Hubzahl der Changiereinrichtung, führt zu größeren Windungsabständen auf der Trommel und damit zu einem geringeren Füllgrad. Unter Füllgrad wird das Verhältnis des von Hohlfäden ausgefüllten Volumens zum Gesamtvolumen des Moduls ausgedrückt in Prozent verstanden.

Um eine gleichmäßige Verteilung der Hohlfäden auf der Vieleck-Wickeltrommel zu erreichen, sind die Trommeldrehzahl und die Changiergeschwindigkeit bzw. -breite so aufeinander abzustimmen bzw. ständig so zu verändern, daß die Lage des Umkehrpunktes jedesmal an einer anderen Stelle der Wickeltrommel liegt, also wandert, und zwar nicht nur in Umfangsrichtung sondern insbesondere auch in Längsrichtung der Wickeltrommel. Dies ist deshalb erforderlich, weil die Hohlfäden zunächst immer nur an den Kanten der Wickeltrommel zum Aufliegen gebracht werden und zwischenzeitlich die noch nicht abgelegten Hohlfadenabschnitte keinen Kontakt mit der Wickeltrommel haben.

Die Herstellung eines Hohlfadenstapels geschieht in der Weise, daß nach Erreichen einer vorgegebenen Bewicklungsdicke auf der Wickeltrommel automatisch oder manuell auf jeder ebenen Fläche der Vielecktrommel ein oder mehrere beispielsweise runde oder polygonale, z.B. rechteckige oder sechseckige, Segmente (Hohlfadenstapel) herausgeschnitten oder ausgestanzt werden. Dies kann beispielsweise mechanisch, mittels Ultraschall oder thermisch erfolgen.

Das Heraustrennen der Hohlfadenstapel kann so erfolgen, daß gleichzeitig mit dem Durchtrennen der Hohlfäden die Hohlfadenenden weitestgehend oder völlig verschlossen (abgeschweißt) werden, was den Vorteil hat, daß beim späteren Einbetten der Endbereiche der Hohlfäden das Eindringen von Einbettmasse (Vergußmasse) in das Hohlfadeninnere (Lumen) verhindert wird. Gleichzeitig können dabei benachbarte Enden der Hohlfäden wenigstens punktförmig miteinander verbunden werden. Auf diese Weise wird in einem Arbeitsgang ein Hohlfadenstapel erzeugt, bei dem die Hohlfäden bereits einen ausreichend festen Verband bilden, der es ermöglicht, die Hohlfadenstapel sicher zu handhaben und ohne Zerstörung der zuvor erzeugten äußerst gleichmäßigen und geordneten Anordnung der Hohlfäden zu transportieren und zu Hohlfadenmodulen weiterzuverarbeiten.

Alle diese Verfahrensschritte können vollautomatisch, also in einem On-line-Verfahren durchgeführt werden.

Ein Hohlfadenmodul kann aus einem oder einer Vielzahl erfindungsgemäß hergestellter Hohlfadenstapel erstellt werden. Dabei können mehrere dieser Hohlfadenstapel übereinandergelegt werden, wobei benachbarte Hohlfadenstapel um einen bestimmten Winkel um die Längsachse des zu bildenden Hohlfadenpaketes gegeneinander verdreht angeordnet werden können. Auf diese Weise erhält man ein Hohlfadenpaket, in dem die Hohlfäden homogen und gleichmäßig verteilt angeordnet sind.

Die Herstellung eines Hohlfadenmoduls aus einem einzelnen Hohlfadenstapel oder einem in der zuvor beschriebenen Weise gebildeten Hohlfadenpaket geschieht in der Weise, daß die Endbereiche der Hohlfäden in eine aushärtbare Einbettmasse (Vergußmasse) eingebettet werden, was beispielsweise durch Einschleudern erfolgen kann. Durch Abtragen eines Teils der erhärteten Einbettmasse (Vergußmasse) am äußeren Umfang des Moduls werden anschließend die Lumen der Hohlfäden freigelegt. Der Modul kann dann in ein seinen Abmessungen entsprechendes Gehäuse mit den notwendigen Abdichtungen und den Anschlüssen für das Zuführen des zu behandelnden Fluids und das Abführen des behandelten Fluids und des abgetrennten Permeats, z.B. der Gaskomponente, des Gasgemisches usw., eingebaut werden. Es können aber auch mehrere Module in Parallel- und/oder Reihenschaltung in einem gemeinsamen Gehäuse angeordnet werden.

Besonders bewährt haben sich scheibenförmige Module, sogenannte Scheibenmodule, insbesondere dann, wenn der Separationsschritt von außen nach innen durch die Hohlfäden erfolgt, da hierbei eine intensive Durchmischung und damit ein intensiver Stoffaustausch auf der Außenseite der Hohlfäden erreicht wird und die Wegstrecke, die das Permeat in den Hohlfäden zurücklegen muß, maximal die Hälfte der Hohlfadenlänge beträgt. Dieser Vorteil bleibt auch bei Trennapparaten erhalten, der aus einer Vielzahl übereinandergestapelter Scheibenmodule aufgebaut ist, da hierbei die die Abtrennung begünstigende geringe Länge der Permeatwege erhalten bleibt.

### Zahlenbeispiele:

12 Hohlfäden, die aus einer 12-Loch-Düse schmelzgesponnen wurden, konnten mühelos gleichzeitig auf einer Wickeltrommel mit sechseckigem Querschnitt changierend aufgewickelt werden. Eine übliche Laufzeit für das Bewickeln einer Vielecktrommel bis zum Heraustrennen der Hohlfadenstapel liegt bei ungefähr 20 Min. Es können jedoch auch längere Laufzeiten, die zu dickeren Hohlfadenstapeln führen, eingestellt werden. Bei einer Changiergeschwindigkeit der Fadenführungseinrichtung von 40 Doppelhüben/Min wurde mit einem Hohlfadenaußendurchmesser von 20 »m bei 25 übereinandergelegten Hohlfadenstapeln eine Stapelhöhe von ca. 20 mm erreicht. Ein geeigneter Außendurchmesser der Stapel betrug 300 mm. Module, die sich in der Praxis hervorragend bewährt haben, bestanden beispielsweise aus bis zu 800 übereinandergelegten erfindungsgemäß hergestellten Hohlfadenstapeln. Scheibenmodule wiesen bis zu 1000 m² Membranfläche auf. Es wurden erfolgreich Module bei der Luftzerlegung eingesetzt, die einen wirksamen Durchmesser von 250 mm und eine Länge von 400 mm aufwiesen. Es wurden auch erfolgreich schmelzgesponnene Hohlfäden mit einem Außendurchmesser von 33 »m zu Hohlfadenstapeln verarbeitet, wobei die Spinngeschwindigkeit und demzufolge auch die Aufwickelgeschwindigkeit bei ungefähr 1000 m/Min lag. Der Füllgrad der aus erfindungsgemäß hergestellten Hohlfadenstapeln gebauten Hohlfadenmodule lag zwischen 30 und 50%, er kann jedoch auch 25% oder 75% betragen. Unter Füllgrad wird das Verhältnis des von Hohlfäden ausgefüllten Volumens zum Gesamtvolumen des Moduls ausgedrückt in Prozent verstanden.

Die Erfindung wird nachfolgend anhand der Zeichnung näher erläutert. Es zeigen in vereinfachter schematischer Darstellungsweise:
- Figur 1:: Eine Ausführungsform des Verfahrens,
- Figur 2:: Eine Vieleck-Aufwickeltrommel,
- Figur 3:: Einen erfindungsgemäß hergestellten Hohlfadenstapel,
- Figur 4:: Einen aus Hohlfadenstapeln bestehenden Prämodul,
- Figur 5:: Zwei verdreht zueinander angeordnete Hohlfadenstapel,
- Figur 6:: Eine rohrförmige Ausführungsform eines Hohlfadenmoduls.

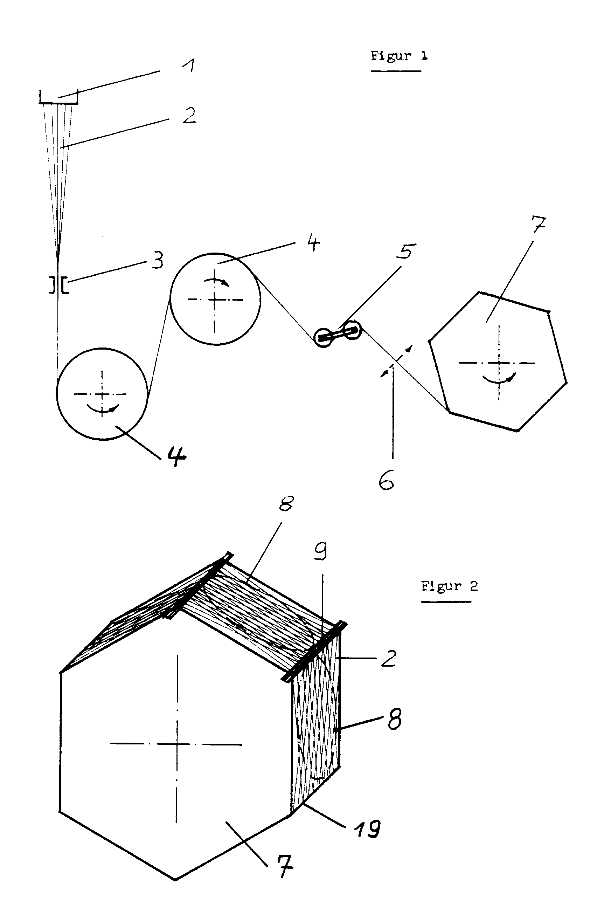

Figur 1 zeigt eine besonders bevorzugte Ausführungsform des Verfahrens mit frischgesponnenen Hohlfäden, d.h. den Weg der Hohlfäden 2 von der Spinndüse 1 bis zur Aufwicklung 7. Die Hohlfäden 2 werden aus einer Mehrlochdüse 1 als Fadenschar gesponnen und zu einem Kabelstrang mit im wesentlichen parallel liegenden Hohlfäden 2 zusammengefaßt. An der Zusammenführungsstelle 3 kann auch eine schützende Avivage (oder dergl.), die jeden einzelnen Hohlfaden 2 mit einer dünnen Gleitschicht umgibt, zugeführt werden. Die Dimensionen der gesponnen Hohlfäden 2 werden durch die über einen Extruder oder eine Zahnradpumpe (Meßpumpe) zugeführte Polymermenge pro Zeiteinheit, die Abzugsgeschwindigkeit der Hohlfäden 2 über die Fördergaletten 4 und einen geregelten und dosierten Fluidstrom im Lumen der Hohlfäden 2 festgelegt. Von den Fördergaletten 4 gelangt der Hohlfaden-Kabelstrang über den Spannungskompensator 5 und den Changierfadenführer 6 zur Aufwickeltrommel 7.

Im gezeigten Beispiel hat die Aufwickeltrommel 7 einen sechseckigen Querschnitt und demzufolge sechs ebene Flächen, auf denen nach dem Bewickeln bis zur gewünschten Bewicklungsdicke die Hohlfadenstapel herausgeschnitten oder ausgestanzt werden.

Aufgrund der Aufwickelgeometrie entstehen im aufzuwickelnden Kabelstrang Spannungsspitzen, die entweder über den Spannungskompensator 5 vergleichmäßigt oder über die Dehnungseigenschaften des verwendeten Polymers der Hohlfäden 2 aufgefangen werden.

Mit fortschreitender Bewicklungsdicke auf der Aufwickeltrommel 7 würde bei konstanter Trommeldrehzahl die Aufwickelspannung immer höher. Um diesen Nachteil zu vermeiden, wird während eines Bewicklungszyklusses die Trommeldrehzahl stufenweise oder kontinuierlich abgesenkt, um in einem vorgegebenen Spannungstoleranzfeld aufwickeln zu können. Zu diesem Zweck kann der Spannungskompensator 5 mit einem Ausgangssignal versehen werden, das die Trommeldrehzahl beeinflußt und eine spannungsgeregelte Aufwicklung bewirkt.

Der Changierfadenführer 6 kann, z. B. U-förmig ausgebildet, dem Hohlfadenkabelstrang die erforderliche Auslenkung zur Ablage auf der sich drehenden Aufwickeltrommel 7 erteilen oder, kammförmig ausgebildet, die Hohlfäden 2 einzeln, im wesentlichen parallel nebeneinander, auf der Aufwickeltrommel 7 ablegen.

Über die Geschwindigkeit des parallel zur Aufwickeltrommelachse hin- und herbewegten Changierfadenführers 6 wird der Kreuzungswinkel der abgelegten Hohlfadenkabelstränge bzw. der Hohlfäden 2 und damit das Volumen und die Dichte der Hohlfadenstapel beeinflußt.

Figur 2 zeigt in perspektivischer Darstellung eine mit Hohlfäden 2 bewickelte Aufwickeltrommel 7 mit sechseckigem Querschnitt (Sechsecktrommel). Die Hohlfadenstapel werden z.B. mit Hilfe einer Schablone z. B. entlang der Linie 8 als kreisförmige Flächenelemente mittels Ultraschall und/oder thermischer bzw. mechanischer Einrichtungen herausgetrennt.

Zur Fixierung der einzelnen Hohlfaden- bzw. Kabelstranglagen auf der Sechsecktrommel 7 werden die zuvor aufgewickelten Hohlfäden 2 bzw. Hohlfadenkabel mit einer geeigneten Vorrichtung 9 jeweils an den Kanten 19 in der geordneten Aufwickellage gehalten.

Beim Heraustrennen der Hohlfadenstapel verschließt das an der Schnittstelle verflüssigte Polymer die Lumen der Hohlfäden 2. Gleichzeitig verbindet das erstarrende Polymer beim Erkalten die Enden benachbarter Hohlfäden 2, so daß ein gut handhabbares Flächengebilde entsteht, bei dem gleichzeitig die beim Wickeln erzeugte Lage der Hohlfäden 2 voll erhalten bleibt.

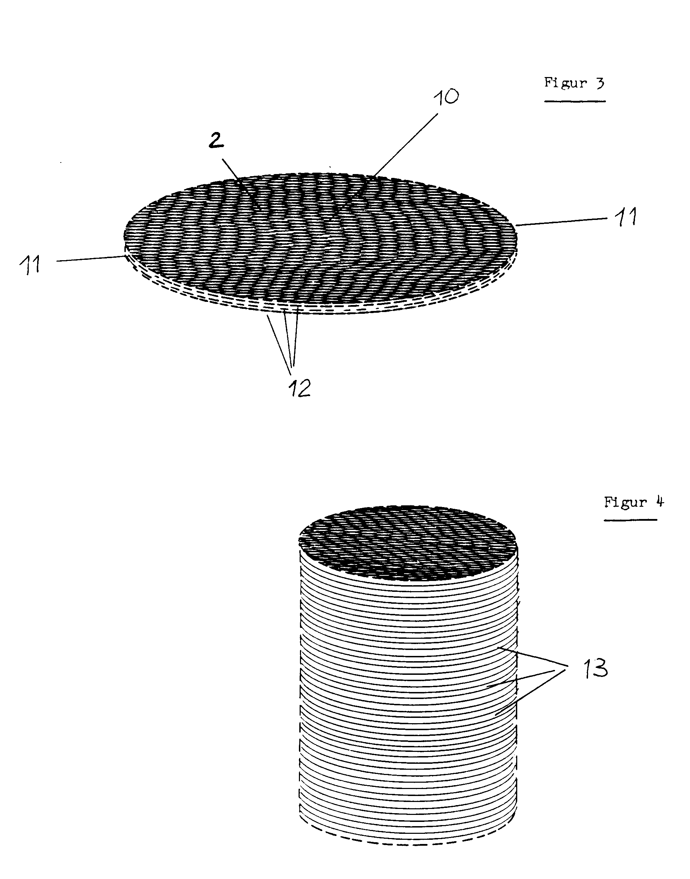

Figur 3 zeigt einen zur Modulmontage vorbereiteten Hohlfadenstapel 10. Die geometrisch geordneten Hohlfäden 2 sind an ihren Enden 11 mit verflüssigtem Polymer verschlossen und durch die gleichzeitige, wenigstens punktförmige Verbindung benachbarter Hohlfadenschichten 12 in ihrer Lage fixiert. Die so erzeugten Hohlfadenstapel 10 sind selbst für eine weitere Verarbeitung mittels Automaten ausreichend stabil und weisen gleichzeitig die zum Einbetten beispielsweise mit flüssigem Gießharz notwendige Voluminösität auf.

Figur 4 zeigt einen aus vielen Hohlfadenstapeln 13 vormontierten Hohlfadenmodul (Prämodul). Die einzelnen Hohlfadenstapel 13 sind (lose) aufeinandergeschichtet. Sie werden ggf. erst im weiteren Verlauf der Fertigung durch zwischen alle Hohlräume eindringendes Gießharz oder dergl. in ihrer Lage fixiert.

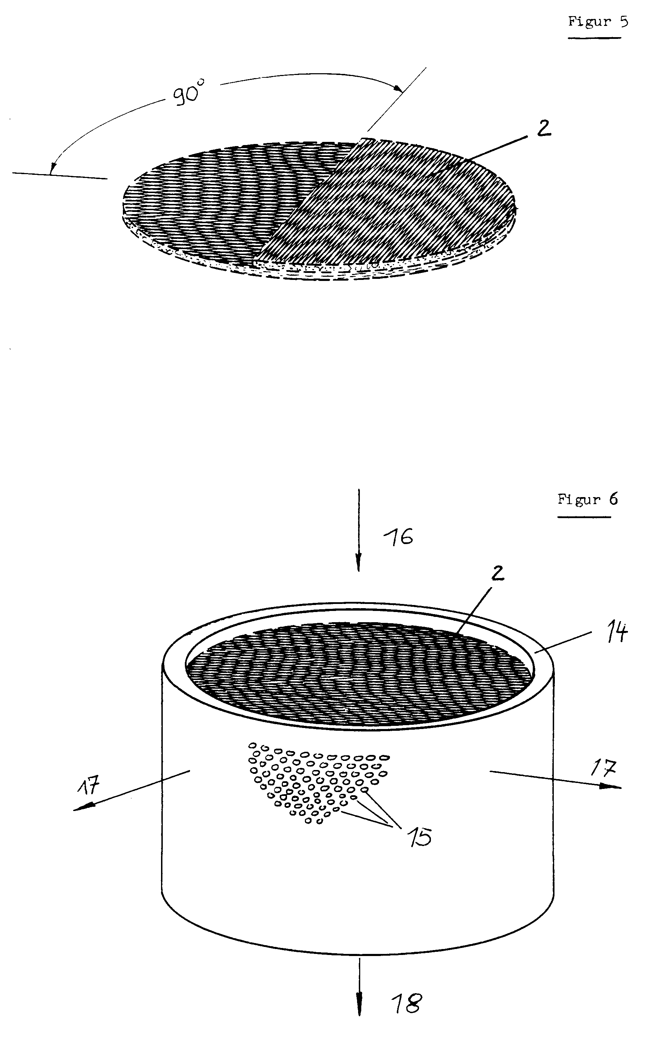

Figur 5 zeigt, wie beispielsweise zwei aufeinanderfolgende Hohlfadenstapel bei der Montage zu einem Modul um die Modulachse gegeneinander verdreht angeordnet werden können. Im gezeigten Beispiel beträgt die Verdrehung 90°. Der Verdrehungswinkel ist beliebig variierbar. Bei einem Verdrehungswinkel von 60° würde mit jedem sechsten Hohlfadenstapel die Ausgangsposition wieder erreicht werden. Der Hohlfadenmodul wird auf diese Weise auf möglichst geringen Druckverlust und gleichmäßige Verteilung des Fluids im Durchströmraum (Außenraum) optimiert (möglichst Blockströmung).

Figur 6 zeigt einen rohrförmig ausgebildeten Modul in perspektivischer Darstellungsweise. Die Herstellung eines solchen Moduls kann durch Einbetten der Hohlfäden 2 im ringförmigen Außenbereich 14 eines vormontierten Hohlfadenmoduls nach Figur 4 in eine aushärtbare Vergußmasse und Abtragen eines Teiles der erhärteten Vergußmasse zum Freilegen der Lumen 15 der Hohlfäden 2 erfolgen. Die Durchströmungsrichtung für ein erstes Fluid, beispielsweise das zu behandelnde Fluid, ist durch den Pfeil 16 dargestellt. Beim Durchströmen des Moduls permeieren beispielsweise eine oder mehrere Komponenten des ersten Fluids durch die Membranwand der Hohlfäden 2 und werden als zweites Fluid (Permeat) nach außen durch die geöffneten Lumen 15 der Hohlfäden 2 abgeführt. Angedeutet ist dieser Vorgang durch die seitlichen Pfeile 17. Das behandelte, z.B. an Permeat verarmte, erste Fluid (Konzentrat) wird am Ende des Moduls abgeleitet (Pfeil 18).

## Patentansprüche

1. Verfahren zum Herstellen von Hohlfadenstapeln, wobei wenigstens ein Hohlfaden mit einer hin- und herbewegten (changierenden) Fadenführungseinrichtung spiralförmig auf eine um ihre Längsachse rotierende Trommel mit vieleckigem Querschnitt aufgewickelt wird und übereinanderliegende im wesentlichen ebene Hohlfadenlagen gebildet werden, und zwar derart, daß die Hohlfadenabschnitte (Windungen) einer Lage die Hohlfadenabschnitte der unmittelbar darüber- und darunterliegenden Lagen kreuzen, jedoch innerhalb einer Lage im wesentlichen parallel zueinander und zumindest zum Teil in gegenseitigen Abständen verlaufen, und wobei nach Erreichen der gewünschten Anzahl von Hohlfadenlagen der Aufwickelvorgang beendet wird, die aufgewickelten Hohlfäden an den Kanten der Trommel festgelegt (fixiert) werden und aus den im wesentlichen ebenen Bereichen des so gebildeten Hohlfadenwickels auf der Trommel Segmente beliebiger Form herausgetrennt und dabei benachbarte Endbereiche der Hohlfäden zumindest punktförmig miteinander verbunden werden.

2. Verfahren nach Anspruch 1, dadurch gekennzeichnet, daß es mit wenigstens einem zum Abtrennen von Gas aus einem Fluid geeigneten Hohlfaden durchgeführt wird.

3. Verfahren nach Anspruch 1, dadurch gekennzeichnet, daß es mit wenigstens einem zur Filtration geeigneten Hohlfaden durchgeführt wird.

4. Verfahren nach wenigstens einem der Ansprüche 1 bis 3, dadurch gekennzeichnet, daß es mit mehreren, in gebündelter Form oder als Fadenschar angeordneten, Hohlfäden durchgeführt wird.

5. Verfahren nach wenigstens einem der Ansprüche 1 bis 4, dadurch gekennzeichnet, daß es mit wenigstens einem frisch gesponnenen Hohlfaden durchgeführt wird.

6. Verfahren nach wenigstens einem der Ansprüche 1 bis 5, dadurch gekennzeichnet, daß der Hohlfaden bzw. die Hohlfäden vor dem Aufwickeln über einen Spannungskompensator geführt wird bzw. werden.

7. Verfahren nach wenigstens einem der Ansprüche 1 bis 6, dadurch gekennzeichnet, daß die Drehzahl der Trommel mit fortschreitender Bewicklungsdicke stufenweise oder kontinuierlich derart verringert wird, daß die Aufwickelspannung in den Hohlfäden in einem vorgegebenen Bereich gehalten wird.

8. Verfahren nach Anspruch 7, dadurch gekennzeichnet, daß die Verringerung der Drehzahl der Trommel über ein Ausgangssignal des Spannungskompensators nach Anspruch 6 bewirkt wird.

9. Verfahren zum Herstellen eines Hohlfadenpaketes durch Übereinanderlegen von Hohlfadenstapeln, die nach dem Verfahren nach wenigstens einem der Ansprüche 1 bis 8 hergestellt wurden, dadurch gekennzeichnet, daß benachbarte Hohlfadenstapel um einen bestimmten Winkel um die Längsachse des zu bildenden Hohlfadenpaketes gegeneinander verdreht angeordnet werden.

10. Verwendung der bzw. des nach dem Verfahren nach wenigstens einem der Patentansprüche 1 bis 8 bzw. 9 hergestellten Hohlfadenstapel bzw. Hohlfadenpaketes zum Abtrennen von Gas aus einem Fluid.

11. Verwendung der bzw. des nach dem Verfahren nach wenigstens einem der Patentansprüche 1 bis 8 bzw. 9 hergestellten Hohlfadenstapel bzw. Hohlfadenpaketes zur Filtration.

## Claims

1. Process for manufacturing hollow thread piles wherein at least one hollow thread is wound spirally with a thread guiding device movable back and forth (chatoyant), onto a drum which has a multi-angular cross-section and rotates about its longitudinal axis, and superimposed, substantially even hollow thread layers are formed such that the hollow thread sections (windings) of a layer cross the hollow thread sections of the layers lying directly above and below, but extend within a layer substantially parallel to one another and at least partly at mutual distances and wherein after reaching the desired number of hollow thread layers the winding operation is ended, the wound up hollow threads are established (fixed) at the edges of the drum and on the drum segments of arbitrary shape are separated out of the substantially even areas of the hollow thread wind lap thus constructed and in so doing adjacent end regions of the hollow threads are connected at least in a punctiform manner with one another.

2. Process according to claim 1, characterized in that the process is carried out with at least one hollow thread suitable for separating gas from a fluid.

3. Process according to claim 1, characterized in that the process is carried out with at least one hollow thread suitable for filtration.

4. Process according to at least one of claims 1 to 3, characterized in that the process is carried out with several hollow threads disposed in bunched form or as a yarn sheet.

5. Process according to at least one of claims 1 to 4, characterized in that the process is carried out with at least one freshly spun hollow thread.

6. Process according to at least one of claims 1 to 5, characterized in that the hollow thread or the hollow threads is or are guided before the winding up by means of a tension compensator.

7. Process according to at least one of claims 1 to 6, characterized in that the rotational speed of the drum is reduced by degrees or continuously as the winding density progresses such that the winding up tension in the hollow threads is held in a pre-stipulated range.

8. Process according to claim 7, characterized in that the reduction of the rotational speed of the drum is effected by means of an output signal of the tension compensator according to claim 6.

9. Process for manufacturing a hollow thread package by laying hollow thread piles over one another, which piles were manufactured according to the process according to at least one of claims 1 to 8, characterized in that adjacent hollow thread piles are disposed offset to one another by a certain angle about the longitudinal axis of the hollow thread package to be formed.

10. Use of the hollow thread piles or hollow thread package for separating gas from a fluid, manufactured according to the process according to at least one of claims 1 to 8 or 9.

11. Use of the hollow thread piles or hollow thread package for filtration, manufactured according to the process according to at least one of claims 1 to 8 or 9.

## Revendications

1. Procédé de fabrication d'un empilement de fibres creuses, dans lequel, au moyen d'un dispositif de guidage de fibre animé d'un mouvement de va-et-vient (dispositif de va-et-vient), on enroule au moins une fibre creuse en spirale sur un tambour à section transversale polygonale et tournant autour de son axe longitudinal et on forme des couches superposées, sensiblement planes, de fibre creuse de manière telle que les segments de fibre creuse (spires) d'une couche se croisent avec les segments de fibre creuse de la couche située immédiatement au-dessus et au-dessous et, à l'intérieur d'une couche s'étendent sensiblement parallèlement les uns aux autres et pour partie au moins à distance les uns des autres et dans lequel une fois atteint le nombre souhaité de couches de fibre creuse on met fin au processus de bobinage, on immobilise (fixe) les couches de fibre creuse sur les arêtes du tambour, sur le tambour, on détache des segments de forme quelconque des parties sensiblement planes de l'enroulement de fibres ainsi formé et on fixe entre elles au moins ponctuellement les parties terminales voisines des fibres.

2. Procédé selon la revendication 1, caractérisé par le fait que celui-ci est mis en oeuvre avec au moins une fibre creuse destinée à la séparation du gaz contenu dans un liquide.

3. Procédé selon la revendication 1, caractérisé par le fait que celui-ci est mis en oeuvre avec au moins une fibre creuse destinée à la filtration.

4. Procédé selon au moins une des revendications 1 à 3, caractérisé par le fait que celui-ci est mis en oeuvre avec plusieurs fibres creuses disposées en faisceau ou en paquet.

5. Procédé selon au moins une des revendications 1 à 4, caractérisé par le fait que celui-ci est mis en oeuvre avec au moins une fibre creuse nouvellement filée.

6. Procédé selon au moins une des revendications 1 à 5, caractérisé par le fait qu'avant enroulement on fait passer la fibre creuse ou les fibres creuses dans un dispositif de compensation de la tension.

7. Procédé selon au moins une des revendications 1 à 6, caractérisé par le fait que, au fur et à mesure que l'épaisseur d'enroulement augmente, on abaisse par paliers ou de manière continue la vitesse de rotation du tambour de telle sorte que la tension d'enroulement dans les fibres creuses soit maintenue à l'intérieur d'une plage déterminée.

8. Procédé selon la revendication 7, caractérisé par le fait que l'abaissement de la vitesse de rotation du tambour est déclenché par un signal de sortie du compensateur de tension selon la revendication 6.

9. Procédé de fabrication d'un paquet de fibres creuses, par superposition d'empilements de fibres creuses obtenus par le procédé selon au moins une des revendications 1 à 8, caractérisé par le fait que l'on dispose des empilements voisins de fibres creuses en les faisant pivoter l'un par rapport à l'autre d'un angle donné autour de l'axe longitudinal du paquet de fibres creuses à constituer.

10. Utilisation des empilements de fibres creuses ou des paquets de fibres creuses fabriqués conformément à au moins une des revendications 1 à 8 ou 9 aux fins de séparer un gaz d'un liquide.

11. Utilisation des empilements de fibres creuses ou des paquets de fibres creuses fabriqués conformément à au moins une des revendications 1 à 8 ou 9 à des fins de filtration.
